# EUROPEAN PATENT SPECIFICATION

(11) **EP 4 498 499 B1**
(45) Date of publication and mention of the grant of the patent: **27.05.2026**
(21) Application number: 22951743.8
(22) Date of filing: 29.09.2022
(51) Int. Cl.: H01M 50/271, H01M 50/30, H01M 50/367

(54) **BATTERY CASE, BATTERY, AND ELECTRIC DEVICE**
BATTERIEGEHÄUSE, BATTERIE UND ELEKTRISCHE VORRICHTUNG
BOÎTIER DE BATTERIE, BATTERIE ET DISPOSITIF ÉLECTRIQUE

(30) Priority: 19.07.2022 CN 202221851437 U
(43) Date of publication of application: 29.01.2025
(73) Proprietor: Contemporary Amperex Technology Co., Limited, Ningde, Fujian 352100 (CN)
(72) Inventor: LIN, Zhuangzhuang, Ningde, Fujian 352100 (CN); LIU, Jianhua, Ningde, Fujian 352100 (CN); LIAO, Xiping, Ningde, Fujian 352100 (CN); HUANG, Yangzhi, Ningde, Fujian 352100 (CN); TIAN, Yuxing, Ningde, Fujian 352100 (CN); YU, Xiaoyin, Ningde, Fujian 352100 (CN)
(74) Representative: Ziebig Hengelhaupt Intellectual Property Attorneys Patentanwaltskanzlei PartGmbB
(86) International application number: PCT/CN2022/122572
(87) International publication number: WO 2024/016479

(56) References cited:
- EP-B1- 2 450 982
- EP-B1- 3 266 056
- WO-A1-2014/024434
- WO-A1-2022/009564
- CN-A- 112 751 121
- CN-U- 203 932 144
- CN-U- 209 104 230
- CN-U- 213 459 966
- CN-U- 213 459 966
- CN-U- 215 070 305
- US-B2- 9 627 663

## Description

### CROSS-REFERENCE

The present application refers to Chinese patent application No. 2022218514372 entitled "BATTERY BOX, BATTERY, AND ELECTRICAL APPARATUS" and filed on July 19, 2022.

### TECHNICAL FIELD

The present application relates to the technical field of batteries and, in particular, to a battery box, a battery and an electrical apparatus.

### BACKGROUND

Energy saving and emission reduction are the key to the sustainable development of automobile industry, and electric vehicles have become an important part of the sustainable development of automotive industry due to their advantages of energy saving and environmental protection. For electric vehicles, battery technology is an important factor related to their development.

Generally, the battery comprises a battery box and battery cells disposed in the battery box, and in order to ensure the safety performance of the battery, it is necessary to install a pressure relief mechanism, such as an explosion-proof valve, on the battery box. However, when the battery is installed in the electrical apparatus, it is not possible to realize the exhaust from the pressure relief mechanism through the air outlet that is preset on the battery apparatus, making it difficult to realize directional exhaust. Battery boxes are known from the following publications: CN 213 459 966 U, EP 2 450 982 B1, EP 3 266 056 B1, WO 2022/009564 A1, WO 2014/024434 A1 or US 9 627 663 B2.

### SUMMARY OF THE INVENTION

Based on this, it is necessary to provide a battery box, a battery and an electrical apparatus with respect to the problem that it is difficult to realize directional exhaust for the electrical apparatus.

The battery box includes: a box body on which a mounting opening for mounting a pressure relief mechanism is formed; and
an auxiliary member provided on an outer surface of the box body, with an exhaust channel in communication with the mounting opening being formed through enclosing by the box body and the auxiliary member,
wherein an exhaust port in communication with the exhaust channel is provided on the auxiliary member.

In the technical solution of embodiments of the present application, the auxiliary member is provided on the outer surface of the box body, and the auxiliary member and the box body together form by enclosure an exhaust channel in communication with the mounting opening, and the auxiliary member is provided with an exhaust port in communication with the exhaust channel. In this way, when the exhaust port is provided on the auxiliary member, it is no longer limited by components such as battery cells in the battery box, but instead, the auxiliary member can be provided according to the position of the air outlet on the electrical apparatus, and the exhaust port is provided on the auxiliary member in correspondence with the air outlet, so as to directionally direct the exhaust position of the pressure relief mechanism through the exhaust channel to the air outlet preset on the electrical apparatus, thereby realizing directional exhaust, thus ensuring that the pressure relief mechanism can be used normally and ensuring the safety performance.

In some embodiments, there is a groove on at least one of two surfaces of the box body and the auxiliary member that face each other so as to form the exhaust channel. In this way, the exhaust channel is defined by the groove(s) on the box body and/or the auxiliary member.

In some embodiments, the groove is formed by a recess on the surface of the box body that faces the auxiliary member, and the auxiliary member sealingly covers an opening of the groove. In this way, by means of forming a groove on the outer surface of the box body, an exhaust channel is defined and formed between the box body and the auxiliary member.

In some embodiments, the groove is formed by a recess on the surface of the box body that faces the auxiliary member, the auxiliary member is nested within the groove, and the auxiliary member comprises a cover plate as well as a side plate provided around the periphery of the cover plate,

wherein the side plate is sealingly connected to an inner wall of the groove, and the cover plate is spaced apart from a bottom wall of the groove and covers an opening of the groove to form the exhaust channel. In this way, a side plate is provided on the cover plate, and the two are combined to form the auxiliary member, so that when the auxiliary member is assembled, the side plate is provided in the groove to support the cover plate by means of the side plate, so that the cover plate is spaced apart from the bottom wall of the groove to define and form the exhaust channel.

In some embodiments, the auxiliary member is provided on a first wall of the box body, and the cover plate is flush with an outer surface of the first wall, or the cover plate is recessed relative to the outer surface of the first wall. This prevents the cover plate from protruding out of the outer surface of the first wall and affecting the flatness of the outer surface of the box body.

In some embodiments, the auxiliary member is welded to the box body. In this way, the connection between the auxiliary member and the box body is realized.

In some embodiments, along the direction of extension of the exhaust channel, two said mounting openings corresponding to two ends of the exhaust channel are formed on the box body. That is, two mounting openings are provided corresponding to two opposite ends of the exhaust channel, respectively, for mounting two pressure relief mechanisms, thereby effectively ensuring the safety performance.

In some embodiments, an orthographic projection of the exhaust port towards the box body is located between the two mounting openings. In this way, exhaust is performed from the center of the auxiliary member.

According to the invention, there are a plurality of exhaust channels which comprise at least two ones provided in an intersecting manner; and each of the exhaust channels comprises two ends along its own direction of extension, the two ends being a first end and a second end, with the mounting opening being provided on at least one of the first end and the second end of at least one of the exhaust channels.

The two exhaust channels, which are provided in an intersecting manner, have a total of two first ends and two second ends, and the mounting opening is provided on at least one of the two first ends and the two second ends, for example, one, two, three, or four mounting openings are provided, so as to match the needs of the actual mounting of the pressure relief mechanism, thereby providing a greater number of positions in which the pressure relief mechanism can be mounted.

In some embodiments, the mounting opening is provided at each of the first end and the second end of each of the exhaust channels, and the exhaust port is arranged corresponding to an intersection point of the two exhaust channels.

That is, the mounting openings are provided corresponding to the first end and the second end of each exhaust channel, and a total of four mounting openings are provided for corresponding mounting of four pressure relief mechanisms. In addition, the exhaust port is arranged corresponding to an intersection point of the two exhaust channels, so that gas flowing into any one of the exhaust channels can be discharged through the exhaust port, thereby realizing the function of exhausting the gas in the two exhaust channels.

In some embodiments, one of the first end and the second end of at least one of the exhaust channels is provided with the mounting opening, and the other one is provided with the exhaust port. For example, if there are two exhaust channels, a total of two first ends and two second ends are included. A mounting opening is correspondingly provided at one of the two first ends and the two second ends, and exhaust ports are correspondingly provided at the remaining ends. Optionally, one mounting opening is provided, and exhaust ports are correspondingly provided at the remaining three positions, so that the gas discharged at the pressure relief mechanism in one mounting opening can be directed to be discharged at the three exhaust ports, thereby enabling the efficiency of the exhaust port to be improved. Further optionally, there are two mounting openings and two exhaust ports, or there are three mounting openings and one exhaust port, and the mounting openings and the exhaust ports may be provided as desired.

In some embodiments, the battery box further comprises the pressure relief mechanism, the pressure relief mechanism being mounted at the mounting opening. It opens when a blowout occurs due to runaway of the battery cell in the battery box to allow toxic gases released by the battery cell to be discharged through the pressure relief mechanism, the exhaust channel, and the exhaust vent, so that the toxic gases are discharged to the air outlet developed by the electrical apparatus.

In a second aspect, the present application provides a battery comprising a battery box as described above.

In a third aspect, the present application provides an electrical apparatus comprising a battery as described above, the battery being used to provide electrical energy.

### DESCRIPTION OF DRAWINGS

Various other advantages and benefits will become apparent to those of ordinary skill in the art upon reading the following detailed description of the implementations. The drawings are for the purpose of illustrating the implementations only and are not to be considered a limitation to the present application. Moreover, in all of the accompanying drawings, the same parts are indicated by the same reference numerals. In the drawings:
Fig. 1 is a structural schematic diagram of a vehicle of some embodiments of the present application;
Fig. 2 is an exploded structural schematic diagram of a battery according to some embodiments of the present application;
Fig. 3 is a structural schematic diagram from one viewing angle of a battery box of some embodiments of the present application;
Fig. 4 is a cross-sectional schematic diagram of the battery box shown in Fig. 3;
Fig. 5 is a structural schematic diagram from another viewing angle of the battery box shown in Fig. 3;
Fig. 6 is a schematic diagram of the arrangement of mounting openings in some embodiments of the present application;
Fig. 7 is a schematic diagram of the arrangement of exhaust ports in the embodiment shown in Fig. 6;
Fig. 8 is a schematic diagram of the arrangement of mounting openings in some other embodiments of the present application;
Fig. 9 is a schematic diagram of the arrangement of exhaust ports in the embodiment shown in Fig. 8;
Fig. 10 is a schematic diagram of the arrangement of mounting openings in yet some more embodiments of the present application; and
Fig. 11 is a schematic diagram of the arrangement of exhaust ports in the embodiment shown in Fig. 10.

Reference numerals in Detailed Description are as follows:
1000, vehicle; 100, battery; 200, controller; 300, motor; 101, battery box; 10, box body; 11, first portion; 12, second portion; 13, mounting opening; 20, battery cell; 30, auxiliary member; 31, exhaust port; 32, cover plate; 34, side plate; 40, exhaust channel; 50, pressure relief mechanism; 60, air outlet.

### DETAILED DESCRIPTION

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

In order to make the above purposes, features and advantages of the utility model more obvious and easy to understand, a detailed description of the specific implementation of the present application is given below in conjunction with the accompanying drawings. Many specific details are set forth in the following description to facilitate a full understanding of the utility model. However, the present application is capable of being implemented in many other ways different from those described herein, and a person skilled in the art may make similar improvements without violating the connotations of the present application, and thus the present application is not limited by the specific embodiments disclosed below.

In the description of the present utility model, it is to be understood that the terms "center", "longitudinal", "lateral", "length ", "width", "thickness", "top", "bottom", "front", "back", "left", "right", "vertical", "horizontal", "top", "bottom", "inside", "outer", "clockwise", "counterclockwise", "axial", "radial", "circumferential" and the like indicate orientation or positional relationships based on those shown in the accompanying drawings, and are only intended to facilitate the description of the present application and to simplify the description, and do not indicate or imply that the referred apparatus or element must have a particular orientation, be constructed and operated in a particular orientation, and therefore not be construed as a limitation of the present application.

Furthermore, the terms "first" and "second" are used for descriptive purposes only and are not to be construed as indicating or implying relative importance or implicitly specifying the number of technical features indicated. As a result, a feature defined by "first" or "second" may expressly or implicitly comprise at least one such feature. In the description of the present application, "multiple" means at least two, e.g., two, three, etc., unless otherwise expressly and specifically limited.

In the present application, unless otherwise expressly provided and limited, the terms "mounting", "connected", "connecting", "fixing" and the like shall be broadly construed. For example, it may be a fixed connection, a detachable connection, or in one piece; it may be a mechanical connection or an electrical connection; it may be a direct connection or an indirect connection through an intermediate medium, and it may be a communication between the interior of two elements or a relationship of interaction between the two elements, unless expressly limited otherwise. For those of ordinary skill in the art, the specific meanings of the above terms in the present application can be understood according to the specific situation.

In the present application, unless otherwise expressly provided and limited, the first feature being "over" or "under" the second feature may mean that the first feature and the second feature are in direct contact, or that the first feature and the second feature are in indirect contact through an intermediate medium. Furthermore, the first feature being "above", "over" and "on top of" the second feature may mean that the first feature is directly above or diagonally above the second feature, or it may simply indicate that the horizontal height of the first feature is greater than that of the second feature. The first feature being "under", "below", and "beneath" the second feature may mean that the first feature is directly below or diagonally below the second feature, or it may simply indicate that the horizontal height of the first feature is less than that of the second feature.

It should be noted that when an element is referred to be "fixed to" or "set on" another element, it may be directly on the other element or there may be intermediate elements. When an element is considered to be "connected" to another element, it may be directly connected to the another element or there may be intermediate elements at the same time. As used herein, the terms "vertical," "horizontal," "up," "down," "left," "right," and similar expressions are for illustrative purposes only, and do not indicate that they are the only implementation.

At present, from the perspective of the development of the market situation, power batteries are more and more widely used. The power batteries are used in energy storage power source systems such as hydraulic, thermal, wind and solar power stations as well as in electric vehicles such as electric bicycles, electric motorcycles and electric cars, and military equipment and aerospace fields. With the continuous expansion of the application field of the power batteries, the market demand is also constantly expanding.

The applicant of the present application notes that when laying the pressure relief mechanism on the battery box, it is necessary to avoid other components such as battery cells inside the battery box, which causes the mounting position of the pressure relief mechanism to be limited, which means that the pressure relief mechanism can only be mounted at a specific position before being assembled to form a battery. Finally, the battery is mounted in an electrical apparatus, for example, the battery is mounted on a white body of an electric vehicle. In this case, an air outlet is reserved on the white vehicle body, but the air outlet may be misaligned with the pressure relief mechanism on the battery box, making it impossible to directionally discharge, through the reserved air outlet, the gas that flows out of the pressure relief mechanism when the pressure relief mechanism is turned on, and thus impossible to ensure that the pressure relief mechanism is properly used.

Based on the above considerations, in order to enable the pressure relief mechanism to exhaust air through the air outlet reserved on the electrical apparatus, on the one hand, it can be considered to change the mounting position of the pressure relief mechanism, so that the mounting position of the pressure relief mechanism corresponds to the air outlet reserved on the electrical apparatus, but the mounting position of the pressure relief mechanism is affected by other components inside the battery box, which makes its arbitrary arrangement impossible, and thus it is impossible to adjust the mounting position of the pressure relief mechanism to achieve the purpose of directional exhaust. On the other hand, the applicant of the present application has found through research that an exhaust channel can be provided between the pressure relief mechanism and the air outlet, and the pressure relief mechanism can be in communication with the air outlet through the exhaust channel, so that the gas discharged at the pressure relief mechanism can be directionally directed to the air outlet of the electrical apparatus without changing the mounting position of the pressure relief mechanism so as to realize directional exhaust, thereby ensuring that the pressure relief mechanism can be used normally.

The battery disclosed in the embodiments of the present application can be used, but not limited to, in an electrical apparatus, such as a vehicle, a ship, or an aircraft. The battery box, the battery, and the like disclosed in the present application can be used to form a power source system for the electrical apparatus, so that a directional exhaust of the pressure relief mechanism can be realized to ensure the safety performance.

Embodiments of the present application provide an electrical apparatus that uses a battery as a power supply, and the electrical apparatus may be, but is not limited to, a mobile phone, a tablet, a laptop, an electric toy, an electric tool, a battery vehicle, an electric vehicle, a ship, a spacecraft, and so on. Among them, the electric toy may include a stationary or mobile electric toy, for example, a game console, an electric car toy, an electric ship toy, and an electric aircraft toy, and the like, and the spacecraft may include an aircraft, a rocket, a space shuttle and a spaceship, and the like.

For the convenience of description, the following embodiments are illustrated with an example in which the electrical apparatus according to an embodiment of the present application is a vehicle 1000.

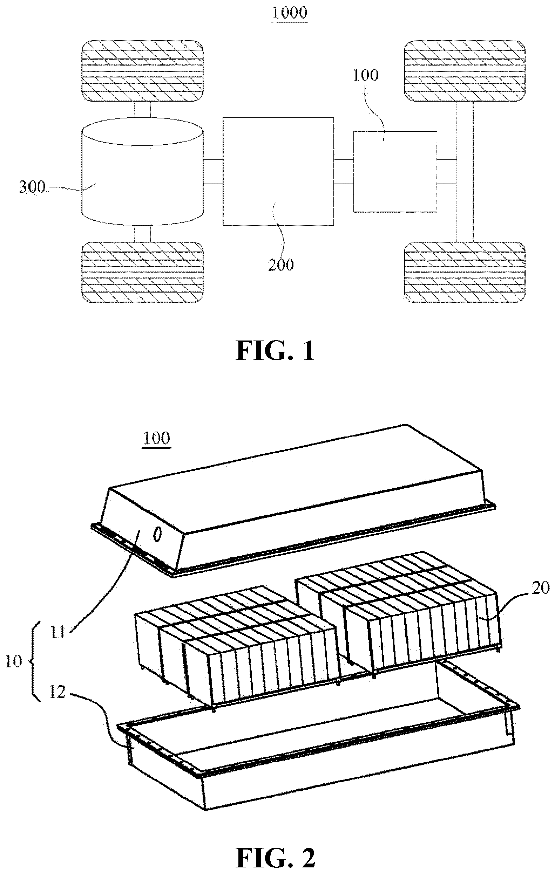

Please refer to Fig. 1, which Fig. 1 is a structural schematic diagram of a vehicle 1000 according to some embodiments of the present application. The vehicle 1000 may be a fuel vehicle, a gas vehicle or a new energy vehicle, and the new energy vehicle may be an all-electric vehicle, a hybrid vehicle or an extended range electric vehicle, etc. The interior of the vehicle 1000 is arranged with a battery 100, and the battery 100 may be arranged at the bottom or head or tail of the vehicle 1000. The battery 100 may be used to power the vehicle 1000. For example, the battery 100 may be used as an operating power source of the vehicle 1000. The vehicle 1000 may further comprise a controller 200 and a motor 300, wherein the controller 200 is used to control the battery 100 to power the motor 300, for example, for the operating power demand when the vehicle 1000 is starting, navigating and driving.

In some embodiments of the present application, the battery 100 not only can serve as an operating power source of the vehicle 1000, but also can serve as a driving power source of the vehicle 1000, thus replacing or partially replacing fuel or natural gas to provide driving power for the vehicle 1000.

Please refer to Fig. 2, which Fig. 2 is an exploded view of a battery 100 according to some embodiments of the present application. The battery 100 comprises a battery box 101 and battery cells 20, the battery cells 20 being accommodated within the battery box 101. Here, the battery box 101 comprises a box body 10, wherein the box body 10 is used to provide an accommodation space for the battery cells 20, and the box body 10 may be of various structures. In some embodiments, the box body 10 may comprise a first portion 11 and a second portion 12, the first portion 11 and the second portion 12 being capped with each other, and the first portion 11 and the second portion 12 together defining the accommodation space for accommodating the battery cell body 20. The second portion 12 may be of a hollow structure with an opening at one end, and the first portion 11 may be of a plate-like structure, wherein the first portion 11 is capped on the opening side of the second portion 12 so that the first portion 11 and the second portion 12 together define the accommodating space; and the first portion 11 and the second portion 12 may each be of a hollow structure with an opening at one end, wherein the opening side of the first portion 11 is capped on the opening side of the second portion 12. Of course, the box body 10 formed by the first portion 11 and the second portion 12 may be of a variety of shapes, such as a cylinder, a rectangular solid, or the like.

In the battery 100, there may be a plurality of battery cells 20, and the plurality of battery cells 20 can be connected in series or in parallel or in a parallel-series connection, wherein the mixed connection means that the plurality of battery cells 20 are connected in both series and parallel. The plurality of battery cells 20 can be directly connected together in series or in parallel or in a parallel-series connection, and then the whole composed of the plurality of battery cells 20 can be accommodated in the box body 10; and of course, the battery 100 may also be in the form of a battery module first formed by the plurality of battery cells 20 being connected in series or in parallel or in mixed connection, then multiple battery modules can be connected in series or in parallel or in mixed connection to form a whole, and accommodated in the box body 10. The battery 100 may further comprise other structures, for example, the battery 100 may further include a bus component for realizing electrical connections between the plurality of battery cells 20.

Each battery cell 20 may be a secondary battery or a primary battery; or it may be a lithium-sulfur battery, a sodium-ion battery or a magnesium-ion battery, but is not limited thereto. The battery cells 20 may be cylindrical, flat, rectangular, or in other shapes.

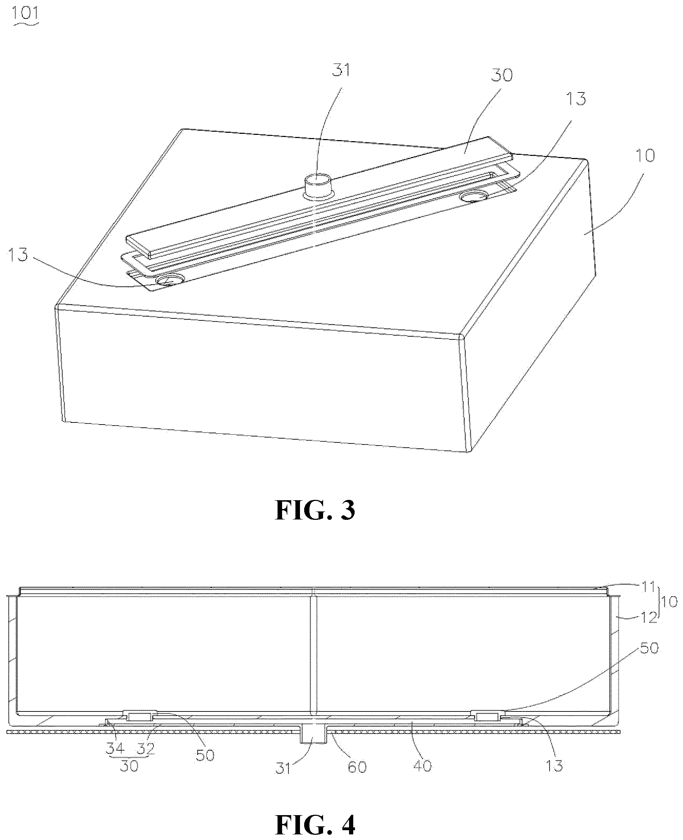

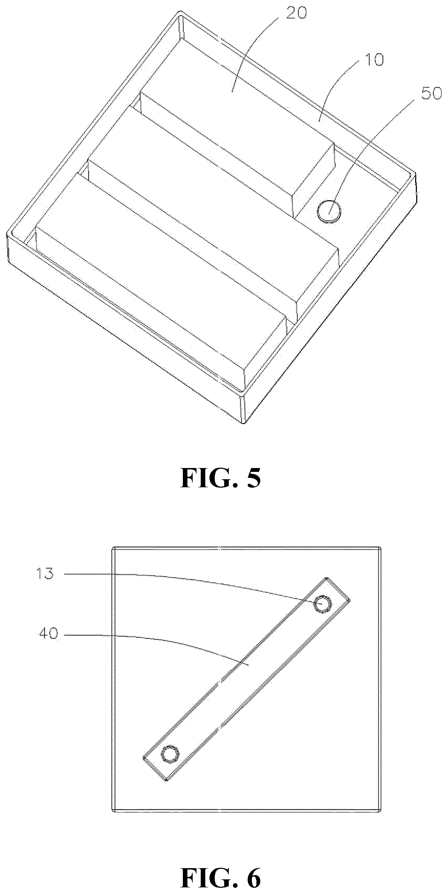

Referring to Figs. 3-5, in an embodiment of the present application, there is provided a battery box 101 comprising a box body 10 and an auxiliary member 30, a mounting opening 13 for mounting a pressure relief mechanism 50 being formed on the box body 10, and the auxiliary member 30 being provided on an outer surface of the box body 10, with an exhaust channel 40 in communication with the mounting opening 13 being formed through enclosing by the box body 10 and the auxiliary member 30, wherein an exhaust port 31 in communication with the exhaust channel 40 is provided on the auxiliary member 30.

As described above, the box body 10 is used to accommodate components such as the battery 100. Generally, the box body 10 comprises a first portion 11 and a second portion 12, wherein the second portion 12 may be of a hollow structure with an opening at one end, and the first portion 11 may be of a plate-like structure, and the first portion 11 is capped on the open side of the second portion 12, so that the two together define an accommodating space for accommodating the battery cell body 20. The mounting opening 13 of the pressure relief mechanism 50 may be formed on the second portion 12 and is in communication with the accommodating space, so that the gas generated in the accommodating space in case of thermal runaway can be discharged through the pressure relief mechanism 50 at the mounting opening 13. Optionally, the auxiliary member 30 is provided on an outer surface of the second portion 12 to form an exhaust channel 40 in communication with the mounting opening 13.

The mounting opening 13 is used for mounting the pressure relief mechanism 50. For example, the mounting opening 13 is a circular hole, or other shaped hole, which is not limited herein as long as the shape of the mounting opening 13 matches the profile of the pressure relief mechanism 50.

The auxiliary member 30 is used to mate with the box body 10 to form the exhaust channel 40, and the auxiliary member 30 may be a sheet metal member or a plastic member as long as it is capable of being sealingly connected to the box body 10.

In the battery box 101 described above, the auxiliary member 30 is provided on the outer surface of the box body 10, and the auxiliary member 30 and the box body 10 together form by enclosure an exhaust channel 40 in communication with the mounting opening 13, and the auxiliary member 30 is provided with an exhaust port 31 in communication with the exhaust channel 40. In this way, when the exhaust port 31 is provided on the auxiliary member 30, it is no longer limited by components such as battery cells 20 in the battery box 101, but instead, the auxiliary member 30 can be provided according to the position of the air outlet 60 on the electrical apparatus, and the exhaust port 31 is provided on the auxiliary member 30 in correspondence with the air outlet 60, so as to directionally direct the exhaust position of the pressure relief mechanism 50 through the exhaust channel 40 to the air outlet 60 preset on the electrical apparatus, thereby realizing directional exhaust, thus ensuring that the pressure relief mechanism 50 can be used normally and ensuring the safety performance.

In some embodiments, there is a groove on at least one of two surfaces of the box body 10 and the auxiliary member 30 that face each other so as to form the exhaust channel 40. In this way, the exhaust channel 40 may be defined by the groove(s) on the box body 10 and/or the auxiliary member 30.

Optionally, a groove is formed by a recess on the surface of the box body 10 that faces the auxiliary member 30, and the auxiliary member 30 sealingly covers the opening of the groove, so that an exhaust channel 40 is defined and formed between the box body 10 and the auxiliary member 30 by means of forming the groove on the outer surface of the box body 10.

Further optionally, a groove is formed by a recess on the surface of the box body 10 that faces the auxiliary member 30, and the auxiliary member 30 is embedded in the groove and comprises a cover plate 32 as well as a side plate 34 provided around the periphery of the cover plate 32, wherein the side plate 34 is sealingly connected to an inner wall of the groove, and the cover plate 32 is spaced apart from a bottom wall of the groove and covers an opening of the groove to form the exhaust channel 40. In this way, a side plate 34 is provided on the cover plate 32, and the two are combined to form the auxiliary member 30, so that when the auxiliary member 30 is assembled, the side plate 34 is provided in the groove to support the cover plate 32 by means of the side plate 34, so that the cover plate 32 is spaced apart from the bottom wall of the groove to define and form the exhaust channel 40.

It will be understood that in some other embodiments, the auxiliary member 30 may also be provided as a separate cover plate 32 and the cover plate 32 may be position-limitedly supported by providing a step at the opening of the groove of the box body 10, and as long as the cover plate 32 is spaced apart from the bottom wall of the groove, the specific structure of the auxiliary member 30 is not limited herein.

Specifically, the auxiliary part 30 is provided on a first wall of the box body 10, and the cover plate 32 is flush with an outer surface of the first wall, or the cover plate 32 is recessed relative to the outer surface of the first wall, so as to prevent the cover plate 32 from protruding out of the outer surface of the first wall and thus affecting the flatness of the outer surface of the box body 10. Here, the first wall is a side wall or a bottom wall of the box body 10. Optionally, the first wall is a bottom wall of the box body 10, and an exhaust channel 40 is formed at the bottom of the box body 10 to facilitate opening the mounting opening 13 on the bottom wall of the box body 10 and mounting the pressure relief mechanism 50. Moreover, the cover plate 32 does not protrude from the bottom wall of the box body 10 to facilitate smooth placement of the box body 10.

In some embodiments, the auxiliary member 30 is welded to the box body 10 to realize the connection of the auxiliary member 30 with the box body 10. For example, the auxiliary member 30 is sealingly connected to the box body 10 by means of friction stir welding to ensure the sealing performance of the exhaust channel 40.

It is to be noted that the number of mounting openings 13 for mounting the pressure relief mechanism 50 may be set according to the demand, and may be set as one or more, as long as the space inside the box body 10 that corresponds to the mounting openings 13 will not be interfered with other components such as the battery cells 20. In addition, the number of exhaust ports 31 provided on the auxiliary member 30 may also be set according to the demand, and may be one or more, which is not limited herein.

Optionally, the orthographic projection of the exhaust port 31 towards the box body 10 is misaligned with the mounting opening 13, which means that the exhaust port 31 will not be provided directly opposite to the mounting opening 13, but instead will be provided opposite to the air outlet 60 on the electrical apparatus in order to achieve directional exhaust.

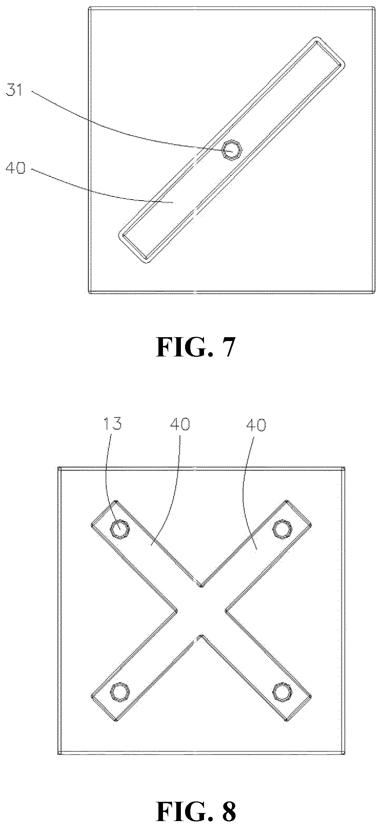

Referring to Figs. 7 - 8, in some embodiments, along the direction of extension of the exhaust channel 40, two mounting openings 13 corresponding to two opposite ends of the exhaust channel 40 are formed on the box body 10, which means that corresponding to the two opposite ends of the exhaust channel 40, two openings 13 are provided and two pressure relief mechanisms 50 are mounted, respectively, which can effectively ensure the safety performance.

Further, the orthographic projection of the exhaust port 31 towards the box body 10 is located between the two mounting openings 13, so that exhaust can be performed from the center of the auxiliary member 30.

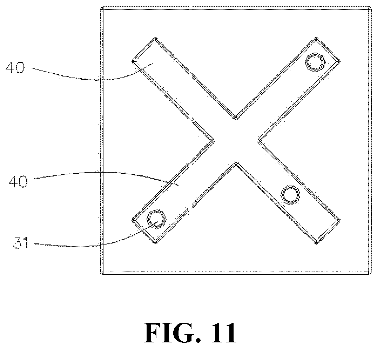

Referring to Fig. 8 - 11, according to the invention, there are a plurality of exhaust channels 40 which comprise at least two ones provided in an intersecting manner, so as to use the two exhaust channels 40 to provide more positions for arranging the mounting openings 13 and the exhaust ports 31, which is more convenient for directional exhaust. Each of the exhaust channels 40 comprises two ends along its own direction of extension, the two ends being a first end and a second end, with the mounting opening 13 being provided on at least one of the first end and the second end of at least one of the exhaust channels 40.

This means that the two exhaust channels 40, which are provided in an intersecting manner, have a total of two first ends and two second ends, and the mounting opening 13 is provided on at least one of the two first ends and the two second ends, for example, one, two, three, or four mounting openings 13 are provided, so as to match the needs of the actual mounting of the pressure relief mechanism 50, thereby providing a greater number of positions in which the pressure relief mechanism 50 can be mounted.

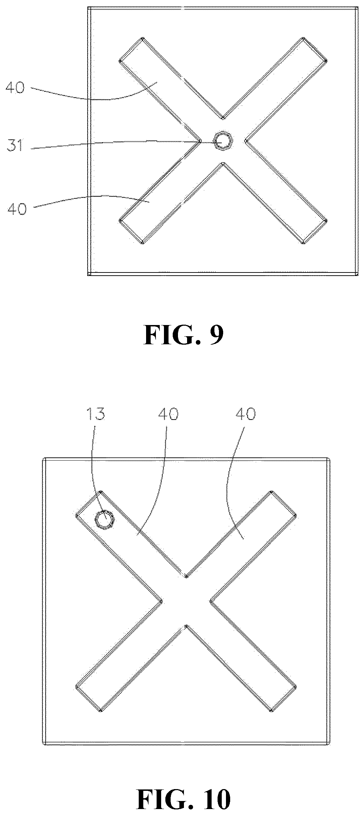

Referring to Figs. 9-10, optionally, the mounting opening 13 is provided at each of the first end and the second end of each of the exhaust channels 40, and the exhaust port 31 is arranged corresponding to an intersection point of the two exhaust channels 40.

That is, the mounting openings 13 are provided corresponding to the first end and the second end of each exhaust channel 40, and a total of four mounting openings 13 are provided for corresponding mounting of four pressure relief mechanisms 50. In addition, the exhaust port 31 is arranged corresponding to an intersection point of the two exhaust channels 40, so that gas flowing into any one of the exhaust channels 40 can be discharged through the exhaust port 31, thereby realizing the function of exhausting the gas in the two exhaust channels 40.

Referring to Figs. 10 - 11, optionally, one of the first end and the second end of at least one of the exhaust channels 40 is provided with the mounting opening 13, and the other one is provided with the exhaust port 31.

For example, if there are two exhaust channels 40, a total of two first ends and two second ends are included. A mounting opening 13 is correspondingly provided at one of the two first ends and the two second ends, and exhaust ports 31 are correspondingly provided at the remaining ends. Optionally, one mounting opening 13 is provided, and exhaust ports 31 are correspondingly provided at the remaining three positions, so that the gas discharged at the pressure relief mechanism 50 in one mounting opening 13 can be directed to be discharged at the three exhaust ports 31, thereby enabling the efficiency of the exhaust port to be improved. Further optionally, there are two mounting openings 13 and two exhaust ports 31, or there are three mounting openings 13 and one exhaust port 31, and the mounting openings 13 and the exhaust ports 31 may be provided as desired.

In any of the above-mentioned embodiments, the battery box 101 further comprises the pressure relief mechanism 50, the pressure relief mechanism 50 being mounted at the mounting opening 13, so as to open when a blowout occurs due to runaway of the battery cell 20 in the battery box 101 to allow toxic gases released by the battery cell 20 to be discharged through the pressure relief mechanism 50, the exhaust channel 40, and the exhaust vent, so that the toxic gases are discharged to the air outlet 60 developed by the electrical apparatus. Optionally, the pressure relief mechanism 50 is an explosion-proof valve, or other pressure relief members, which is not limited herein. According to some embodiments of the present application, the present application further provides a battery 100 comprising the battery cell 20 described in any one of the above solutions.

According to some embodiments of the present application, the present application further provides an electrical apparatus comprising the battery 100 of any one of the above solutions, the battery 100 being used to provide electrical energy to the electrical apparatus.

The electrical apparatus may be any of the aforementioned devices or systems in which the battery 100 is applied.

According to some embodiments of the present application, referring to Fig. 4, the present application provides a battery box comprising a box body 10 and an auxiliary member 30, a mounting opening 13 for mounting a pressure relief mechanism 50 being formed on the box body 10, and the auxiliary member 30 being provided on an outer surface of the box body 10, with an exhaust channel 40 in communication with the mounting opening 13 being formed through enclosing by the box body 10 and the auxiliary member 30, wherein an exhaust port 31 in communication with the exhaust channel 40 is provided on the auxiliary member 30. In the battery box 101 described above, the auxiliary member 30 is provided on the outer surface of the box body 10, and the auxiliary member 30 and the box body 10 together form by enclosure an exhaust channel 40 in communication with the mounting opening 13, and the auxiliary member 30 is provided with an exhaust port 31 in communication with the exhaust channel 40. In this way, when the exhaust port 31 is provided on the auxiliary member 30, it is no longer limited by components such as battery cells 20 in the battery box 101, but instead, the auxiliary member 30 can be provided according to the position of the air outlet 60 on the electrical apparatus, and the exhaust port 31 is provided on the auxiliary member 30 in correspondence with the air outlet 60, so as to directionally direct the exhaust position of the pressure relief mechanism 50 through the exhaust channel 40 to the air outlet 60 preset on the electrical apparatus, thereby realizing directional exhaust, thus ensuring that the pressure relief mechanism 50 can be used normally and ensuring the safety performance.

Moreover, the number of exhaust channels 40 may be one or more, and the mounting opening 13 may be arranged corresponding to at least one of the two opposite ends of the exhaust channel 40 or may be arranged corresponding to an intermediate region of the exhaust channel 40. Similarly, the exhaust port 31 is provided corresponding to the air outlet 60 on the electrical apparatus, and is misaligned with the mounting opening 13, and may be provided corresponding to at least one of the two opposite ends of the exhaust channel 40, or after the two exhaust channels 40 are provided in intersection with each other, the air outlet 60 is provided at the intersection point of the two exhaust channels 40. In this way, the mounting opening 13 and the air outlet 60 can be arranged according to the actual needs for the purpose of directing the airflow directionally to the air outlet 60.

## Claims

1. A battery box (101), wherein the battery box (101) comprises:
a box body (10) on which a mounting opening (13) for mounting a pressure relief mechanism (50) is formed; and
an auxiliary member (30) provided on an outer surface of the box body (10), with an exhaust channel (40) in communication with the mounting opening (13) being formed through enclosing by the box body (10) and the auxiliary member (30),
wherein an exhaust port (31) in communication with the exhaust channel (40) is provided on the auxiliary member (30);
**characterized in that** there are a plurality of exhaust channels (40) which comprise at least two ones provided in an intersecting manner; and
each of the exhaust channels (40) comprises two ends along its own direction of extension, the two ends being a first end and a second end, with the mounting opening (13) being provided on at least one of the first end and the second end of at least one of the exhaust channels (40).

2. The battery box (101) according to claim 1, wherein there is a groove on at least one of two surfaces of the box body (10) and the auxiliary member (30) that face each other so as to form the exhaust channel (40).

3. The battery box (101) according to claim 2, wherein the groove is formed by a recess on the surface of the box body (10) that faces the auxiliary member (30), and the auxiliary member (30) sealingly covers an opening of the groove.

4. The battery box (101) according to claim 2, wherein the groove is formed by a recess on the surface of the box body (10) that faces the auxiliary member (30), the auxiliary member (30) is nested within the groove, and the auxiliary member (30) comprises a cover plate (32) as well as a side plate (34) provided around the periphery of the cover plate (32),
wherein the side plate (34) is sealingly connected to an inner wall of the groove, and the cover plate (32) is spaced apart from a bottom wall of the groove and covers an opening of the groove to form the exhaust channel (40).

5. The battery box (101) according to claim 4, wherein the auxiliary member (30) is provided on a first wall of the box body (10), and the cover plate (32) is flush with an outer surface of the first wall, or the cover plate (32) is recessed relative to the outer surface of the first wall.

6. The battery box (101) according to claim 3, wherein the auxiliary member (30) is welded to the box body (10).

7. The battery box (101) according to any one of claims 1-6, wherein
along the direction of extension of the exhaust channel (40), two said mounting openings (13) corresponding to two ends of the exhaust channel (40) are formed on the box body (10).

8. The battery box (101) according to claim 7, wherein an orthographic projection of the exhaust port (31) towards the box body (10) is located between the two said mounting openings (13).

9. The battery box (101) according to any one of claims 1-8, wherein the mounting opening (13) is provided at each of the first end and the second end of each of the exhaust channels (40), and the exhaust port (31) is arranged corresponding to an intersection point of two said exhaust channels (40).

10. The battery box (101) according to any one of claims 1-8, wherein one of the first end and the second end of at least one of the exhaust channels (40) is provided with the mounting opening (13), and the other one is provided with the exhaust port (31).

11. The battery box (101) according to any one of claims 1-6, wherein the battery box (101) further comprises the pressure relief mechanism (50), the pressure relief mechanism (50) being mounted at the mounting opening (13).

12. A battery (100), comprising the battery box (101) according to any one of claims 1-11.

13. An electrical apparatus comprising the battery (100) according to claim 12, the battery (100) being used to provide electrical energy.

## Patentansprüche

1. Ein Batteriekasten (101), wobei der Batteriekasten (101) umfasst:
einen Kastenkörper (10), an dem eine Montageöffnung (13) zum Montieren eines Druckentlastungsmechanismus (50) ausgebildet ist; und
ein Hilfselement (30), das an einer Außenfläche des Kastenkörpers (10) vorgesehen ist, wobei ein Abgaskanal (40), der mit der Montageöffnung (13) in Kommunikation steht, durch Umschließen durch den Kastenkörper (10) und das Hilfselement (30) ausgebildet ist,
wobei an dem Hilfselement (30) eine Abgasöffnung (31), die mit dem Abgaskanal (40) in Kommunikation steht, vorgesehen ist;
**dadurch gekennzeichnet, dass** es eine Mehrzahl von Abgaskanälen (40) gibt, die wenigstens zwei in sich schneidend angeordnete Abgaskanäle umfassen; und
jeder der Abgaskanäle (40) entlang seiner eigenen Erstreckungsrichtung zwei Enden umfasst, wobei die zwei Enden ein erstes Ende und ein zweites Ende sind, wobei die Montageöffnung (13) an wenigstens einem des ersten Endes und des zweiten Endes von wenigstens einem der Abgaskanäle (40) vorgesehen ist.

2. Der Batteriekasten (101) nach Anspruch 1, wobei an wenigstens einer von zwei einander zugewandten Flächen des Kastenkörpers (10) und des Hilfselements (30) eine Nut vorhanden ist, um den Abgaskanal (40) auszubilden.

3. Der Batteriekasten (101) nach Anspruch 2, wobei die Nut durch eine Ausnehmung an der Fläche des Kastenkörpers (10), die dem Hilfselement (30) zugewandt ist, ausgebildet ist, und das Hilfselement (30) eine Öffnung der Nut dichtend abdeckt.

4. Der Batteriekasten (101) nach Anspruch 2, wobei die Nut durch eine Ausnehmung an der Fläche des Kastenkörpers (10), die dem Hilfselement (30) zugewandt ist, ausgebildet ist, das Hilfselement (30) innerhalb der Nut verschachtelt ist, und das Hilfselement (30) eine Abdeckplatte (32) sowie eine Seitenplatte (34) umfasst, die um den Umfang der Abdeckplatte (32) herum vorgesehen ist,
wobei die Seitenplatte (34) dichtend mit einer Innenwand der Nut verbunden ist und die Abdeckplatte (32) von einer Bodenwand der Nut beabstandet ist und eine Öffnung der Nut abdeckt, um den Abgaskanal (40) auszubilden.

5. Der Batteriekasten (101) nach Anspruch 4, wobei das Hilfselement (30) an einer ersten Wand des Kastenkörpers (10) vorgesehen ist, und die Abdeckplatte (32) bündig mit einer Außenfläche der ersten Wand ist, oder die Abdeckplatte (32) gegenüber der Außenfläche der ersten Wand zurückgesetzt ist.

6. Der Batteriekasten (101) nach Anspruch 3, wobei das Hilfselement (30) mit dem Kastenkörper (10) verschweißt ist.

7. Der Batteriekasten (101) nach einem der Ansprüche 1-6, wobei entlang der Erstreckungsrichtung des Abgaskanals (40) zwei der Montageöffnungen (13), die zwei Enden des Abgaskanals (40) entsprechen, an dem Kastenkörper (10) ausgebildet sind.

8. Der Batteriekasten (101) nach Anspruch 7, wobei eine orthografische Projektion der Abgasöffnung (31) in Richtung des Kastenkörpers (10) zwischen den zwei Montageöffnungen (13) liegt.

9. Der Batteriekasten (101) nach einem der Ansprüche 1-8, wobei die Montageöffnung (13) an jedem des ersten Endes und des zweiten Endes jedes der Abgaskanäle (40) vorgesehen ist, und die Abgasöffnung (31) entsprechend einem Schnittpunkt von zwei der Abgaskanäle (40) angeordnet ist.

10. Der Batteriekasten (101) nach einem der Ansprüche 1-8, wobei eines des ersten Endes und des zweiten Endes von wenigstens einem der Abgaskanäle (40) mit der Montageöffnung (13) versehen ist und das andere mit der Abgasöffnung (31) versehen ist.

11. Der Batteriekasten (101) nach einem der Ansprüche 1-6, wobei der Batteriekasten (101) ferner den Druckentlastungsmechanismus (50) umfasst, wobei der Druckentlastungsmechanismus (50) an der Montageöffnung (13) montiert ist.

12. Eine Batterie (100), umfassend den Batteriekasten (101) nach einem der Ansprüche 1-11.

13. Ein elektrisches Gerät, umfassend die Batterie (100) nach Anspruch 12, wobei die Batterie (100) zum Bereitstellen elektrischer Energie verwendet wird.

## Revendications

1. Un boîtier de batterie (101), dans lequel le boîtier de batterie (101) comprend :
un corps de boîtier (10), sur lequel est formée une ouverture de montage (13) destinée au montage d'un mécanisme de décharge de pression (50) ; et
un élément auxiliaire (30) disposé sur une surface extérieure du corps de boîtier (10), un canal d'évacuation (40) en communication avec l'ouverture de montage (13) étant formé par l'enveloppement du corps de boîtier (10) et de l'élément auxiliaire (30),
dans lequel un orifice d'évacuation (31) en communication avec le canal d'évacuation (40) est prévu sur l'élément auxiliaire (30) ;
**caractérisé en ce que** il existe une pluralité de canaux d'évacuation (40) qui comprennent au moins deux canaux disposés de manière sécante ; et
chacun des canaux d'évacuation (40) comprend deux extrémités le long de sa propre direction d'extension, les deux extrémités étant une première extrémité et une seconde extrémité, l'ouverture de montage (13) étant prévue sur au moins l'une de la première extrémité et de la seconde extrémité d'au moins l'un des canaux d'évacuation (40).

2. Le boîtier de batterie (101) selon la revendication 1, dans lequel une rainure est présente sur au moins l'une de deux surfaces du corps de boîtier (10) et de l'élément auxiliaire (30) qui se font face, afin de former le canal d'évacuation (40).

3. Le boîtier de batterie (101) selon la revendication 2, dans lequel la rainure est formée par un évidement sur la surface du corps de boîtier (10) faisant face à l'élément auxiliaire (30), et l'élément auxiliaire (30) recouvre de manière étanche une ouverture de la rainure.

4. Le boîtier de batterie (101) selon la revendication 2, dans lequel la rainure est formée par un évidement sur la surface du corps de boîtier (10) faisant face à l'élément auxiliaire (30), l'élément auxiliaire (30) est imbriqué dans la rainure, et l'élément auxiliaire (30) comprend une plaque de recouvrement (32) ainsi qu'une plaque latérale (34) disposée autour de la périphérie de la plaque de recouvrement (32),
dans lequel la plaque latérale (34) est reliée de manière étanche à une paroi interne de la rainure, et la plaque de recouvrement (32) est espacée d'une paroi de fond de la rainure et recouvre une ouverture de la rainure afin de former le canal d'évacuation (40).

5. Le boîtier de batterie (101) selon la revendication 4, dans lequel l'élément auxiliaire (30) est disposé sur une première paroi du corps de boîtier (10), et la plaque de recouvrement (32) est affleurante avec une surface extérieure de la première paroi, ou la plaque de recouvrement (32) est en retrait par rapport à la surface extérieure de la première paroi.

6. Le boîtier de batterie (101) selon la revendication 3, dans lequel l'élément auxiliaire (30) est soudé au corps de boîtier (10).

7. Le boîtier de batterie (101) selon l'une quelconque des revendications 1 à 6, dans lequel
le long de la direction d'extension du canal d'évacuation (40), deux dites ouvertures de montage (13) correspondant à deux extrémités du canal d'évacuation (40) sont formées sur le corps de boîtier (10).

8. Le boîtier de batterie (101) selon la revendication 7, dans lequel une projection orthographique de l'orifice d'évacuation (31) vers le corps de boîtier (10) est située entre les deux dites ouvertures de montage (13).

9. Le boîtier de batterie (101) selon l'une quelconque des revendications 1 à 8, dans lequel l'ouverture de montage (13) est prévue à chacune de la première extrémité et de la seconde extrémité de chacun des canaux d'évacuation (40), et l'orifice d'évacuation (31) est agencé en correspondance avec un point d'intersection de deux dits canaux d'évacuation (40).

10. Le boîtier de batterie (101) selon l'une quelconque des revendications 1 à 8, dans lequel l'une de la première extrémité et de la seconde extrémité d'au moins l'un des canaux d'évacuation (40) est pourvue de l'ouverture de montage (13), et l'autre est pourvue de l'orifice d'évacuation (31).

11. Le boîtier de batterie (101) selon l'une quelconque des revendications 1 à 6, dans lequel le boîtier de batterie (101) comprend en outre le mécanisme de décharge de pression (50), le mécanisme de décharge de pression (50) étant monté au niveau de l'ouverture de montage (13).

12. Une batterie (100), comprenant le boîtier de batterie (101) selon l'une quelconque des revendications 1 à 11.

13. Un appareil électrique comprenant la batterie (100) selon la revendication 12, la batterie (100) étant utilisée pour fournir de l'énergie électrique.
